# EUROPÄISCHE PATENTSCHRIFT

(11) **EP 4 469 241 B1**
(45) Veröffentlichungstag und Bekanntmachung des Hinweises auf die Patenterteilung: **14.01.2026**
(21) Anmeldenummer: 22813409.4
(22) Anmeldetag: 18.11.2022
(51) Int. Cl.: B25B 27/00, B23P 19/08

(54) **MONTAGEWERKZEUG ZUR DICHTUNGSRINGMONTAGE**
MOUNTING TOOL FOR MOUNTING A SEALING RING
OUTIL DE FIXATION POUR LA FIXATION D'UNE BAGUE D'ÉTANCHÉITÉ

(30) Priorität: 26.01.2022 DE 102022101803
(43) Veröffentlichungstag der Anmeldung: 04.12.2024
(73) Patentinhaber: Schaeffler Technologies AG & Co. KG, 91074 Herzogenaurach (DE)
(72) Erfinder: SATTLER, Klaus, 91456 Diespeck (DE); MORGENSTERN, Benedikt, 91413 Neustadt an der Aisch (DE); SCHWENDNER, Alfred, 91074 Herzogenaurach (DE); SCHAMAL, Wolfgang, 90451 Nürnberg (DE); METZLER, Oliver, 90556 Seukendorf (DE); PABSTHART, Lukas, 96158 Frensdorf (DE)
(74) Vertreter: Schaeffler Technologies
(86) Internationale Anmeldenummer: PCT/DE2022/100864
(87) Internationale Veröffentlichungsnummer: WO 2023/143653

(56) Entgegenhaltungen:
- DE-A1- 3 409 845
- JP-A- 2010 046 727

## Beschreibung

Die Erfindung betrifft ein Montagewerkzeug zur Montage eines Dichtungsrings auf einem Bauteil, mit einem Aufnahmedorn zur Aufnahme des Bauteils und einer Aufspreizanordnung mit einem Sitz zur Aufnahme des Dichtungsrings über den Sitz, um den Dichtungsring in einem aufgespreizten Zustand über das Bauteil zu ziehen.

Dichtungsringe können beispielsweise als O-Ringe oder als Quadratringe ausgeführt sein. Es sind ringförmige Dichtungselemente, die aus einem elastischen Gummikörper bestehen, der in einem montierten Zustand eine Abdichtung zwischen zwei Bauteilen gewährleistet. Ein Bauteil, an dem ein Dichtungsring zum Einsatz kommen kann, ist beispielsweise ein Stellkolben in einem Thermostatgehäuse. Bei der Montage des O-Rings auf das Bauteil werden die O-Ringe aus einem ungespannten Zustand aufgeweitet, über den zu montierenden Bereich des Bauteils gebracht und auf das Bauteil abgestreift, wobei sich der O-Ring wieder etwas entspannt, um auf dem Bauteil meist unter geringer Spannung zu sitzen. Das Montagewerkzeug muss hierbei den jeweiligen Gegebenheiten, wie beispielsweise der Größe des O-Rings, angepasst sein. Das Montagewerkzeug muss folglich regelmäßig angepasst werden, wenn eine andere Größe eines O-Ring montiert werden soll. Es sind auch Werkzeuge verfügbar, die sich automatisch anpassen. Der eigentliche Montageprozess ist überwiegend manuell beziehungsweise kaum automatisiert.

Die JP 2010 046 727 A beschreibt eine Montagevorrichtung zur Montage eines O-Rings in einer ringförmigen Nut. Es ist eine Nockenstange vorgesehen, die in einer axialen Mittelrichtung gleitet, sowie ein Klauenelement, das einen Durchmesser des O-Rings durch Öffnen in radialer Richtung erweitert. Der Oberbegriff von Anspruch 1 wird in diesem Dokument offenbart.

Es besteht ein ständiges Bedürfnis, ein solches Montagewerkzeug zu verbessern und zu vereinfachen, insbesondere zumindest teilweise zu automatisieren und die erforderliche Montagezeit zu reduzieren.

Es ist die Aufgabe der Erfindung Maßnahmen aufzuzeigen, die ein verbessertes Montagewerkzeug für Dichtungsringe, insbesondere O-Ringe, ermöglichen.

Die Lösung der Aufgabe erfolgt durch ein Montagewerkzeug mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Eine Ausführungsform betrifft ein Montagewerkzeug zur Montage eines Dichtungsrings an einem Bauteil, mit einem Gehäuse, einem Aufnahmedorn zur Aufnahme des Bauteils, einer den Aufnahmedorn umgebenden Aufspreizanordnung mit einem Sitz zur Aufnahme des Dichtungsrings über den Sitz, wobei gegeneinander in einer Wirkverbindung stehende Aufgleitschrägen des Aufnahmedorns und der Aufspreizanordnung bei einer zwischen Aufnahmedorn und Aufspreizanordnung in einer in Axialrichtung bewirkten Relativbewegung die Aufspreizanordnung zwischen einer Ausgangsstellung und aufgespreizten Stellung bewegen und wobei die Aufspreizanordnung in dem Gehäuse in Axialrichtung zwischen einer ersten Endstellung und einer zweiten Endstellung beweglich aufgenommen ist und das Gehäuse den Sitz der Aufspreizanordnung in radialer Richtung hinterschneidet, wobei die Relativbewegung zwischen Aufnahmedorn und der Aufspreizanordnung in die aufgespreizte Stellung und die Relativbewegung zwischen Aufspreizanordnung und Gehäuse in die zweite Endstellung gegen eine oder jeweilige Federbeaufschlagungen erfolgt, wobei der Aufnahmedorn und die Aufspreizanordnung sich jeweils über koaxial zum Aufnahmedorn und zu einer in Axialrichtung A verlaufenden Mittelachse angeordnete Druckfedern nach vertikal unten gegenüber dem Gehäuse abstützen.

Die hier gewählte Anordnung der Druckfedern ermöglicht eine einfache Bauweise des Montagewerkzeugs bei gleichzeitig deutlich verringerten Herstellkosten.

Die Aufgleitschrägen sind bevorzugt paarweise zueinander angeordnet und zwar derart, dass jeweils eine Aufgleitschräge an einem Innenumfang der Aufspreizanordnung und die andere Aufgleitschräge auf einem Außenumfang des Aufnahmedorns verläuft.

Die paarweise Aufgleitschrägen sind in Axialrichtung betrachtet bezüglich ihrer Neigung gegenläufig ausgeführt.

Der Aufnahmedorn kann in Axialrichtung eine längere Ausdehnung haben als die Aufspreizanordnung. In der aufgespreizten Stellung der Aufspreizanordnung kann vorgesehen sein, dass der Aufnahmedorn zu einer axialen Seite hin mit der Aufspreizanordnung weitestgehend bündig abschließt. Der Aufnahmedorn weist bevorzugt zur anderen axialen Seite hin einen Führungsschaft auf, über den der Aufnahmedorn zumindest mittelbar in dem Gehäuse in Axialrichtung geführt ist. Es kann auch vorgesehen sein, dass das Gehäuse ein Gehäusedeckelelement aufweist, in dem der Führungsschaft des Aufnahmedorns geführt ist.

Das Gehäuse ist in seiner innenumfänglichen Ausdehnung an die aufgespreizte Stellung der Aufspreizanordnung angepasst, so dass die Aufspreizanordnung in ihrer Ausgangsstellung einen radialen Umfangsspalt zu dem Gehäuse aufweist. Das Gehäuse kann dazu vorbereitet sein, das gesamte Montagewerkzeug beispielsweise auf einem Montagetisch zu halten.

Das Gehäuse, gegebenenfalls auch das Gehäusedeckelelement, ist/sind bevorzugt durch ein additives Fertigungsverfahren, insbesondere ein 3D-Druckverfahren, gebildet.

Die Aufspreizanordnung kann insbesondere mehrteilig aufgebaut sein. Hierbei kann vorgesehen sein, dass der Sitz als einteiliges oder als mehrteiliges Bauteil gegenüber einem Grundkörper der Aufspreizanordnung ausgeführt ist. Die radiale Hinterschneidung des Sitzes der Aufspreizanordnung durch das Gehäuse ist insbesondere dadurch realisiert, dass der Sitz mehrere über den Umfang verteilte axial verlaufende Ausnehmungen ausbildet, in die das Gehäuse von außen nach radial innen hineinragt. Bevorzugt weist das Gehäuse im Bereich der Axialebene des Sitzes einen annähernd sternförmig konturierten Axialschnitt auf, wobei nach radial innen ragende Spitzen dieser Kontur bis in die Ausnehmungen des Sitzes verlaufen und damit die radiale Hinterschneidung bilden.

Bei der vorliegenden Ausführungsform ist es möglich mehrere Arbeitsschritte zusammenzufassen oder synchronisiert durchzuführen. Es ist möglich in einem Arbeitsschritt den Dichtungsring zu weiten, das Bauteil für die Montage des Dichtungsrings zu positionieren und den Dichtungsring auf dem Bauteil abzustreifen. Durch eine lineare Bewegung des auf dem Aufnahmedorn gehaltenen Bauteils in Axialrichtung wird die Aufspreizanordnung bezüglich ihres Umfangs geweitet, bis der Aufnahmedorn gegen die Aufspreizanordnung fährt und dort arretiert. Durch Fortsetzung der linearen Bewegung in Axialrichtung senkt sich synchron die Aufspreizanordnung und der Aufnahmedorn im Gehäuse ab und der auf dem Sitz der Aufspreizanordnung gehaltene Dichtungsring wird über die Gehäuseschultern abgestreift.

In einer bevorzugten Ausführungsform ist vorgesehen, dass die Aufspreizanordnung bei einer relativen Bewegung zwischen den beiden Endstellungen den Sitz der Aufspreizanordnung in axialer Richtung durchfährt. Hierbei kann unmittelbar das Gehäuse das Abstreifen des Dichtungsrings auf das Bauteil übernehmen. Das Gehäuse kann hierzu an sich unbewegt sein beziehungsweise still stehen, da es beispielsweise von einem Handhabungsgerät gehalten wird. Es sind keine weiteren Einzelteile für das Gehäuse notwendig. Zweckmäßig ist das Gehäuse mit einer Schulter ausgestattet, über die der Dichtungsring kontaktiert wird. Die Schulter kann Teil der bereits beschriebenen sternförmigen Kontur sein. Zweckmäßigerweise kommt es bei der Bewegung zwischen den beiden Endstellungen des Gehäuses nicht zu einer Berührung zwischen Gehäuse und dem Sitz der Aufspreizanordnung. Das Gehäuse ist in diesem Bereich freigestellt von dem Sitz der Aufspreizanordnung.

Besonders bevorzugt ist, wenn das Gehäuse mehrere über einen Umfang verteilte Anlageschultern aufweist, wobei die Anlageschultern die Aufspreizanordnung in radialer Richtung hinterschneiden. Mehrere Anlageschultern haben den Vorteil, dass der Dichtungsring besonders gleichmäßig aufgegriffen werden kann. Vorteilhafterweise kann vorgesehen sein, dass die Anlageschultern während der gesamten Bewegung zwischen den beiden Endstellungen die Aufspreizanordnung in radialer Richtung hinterschneiden. Es ist aber auch eine Ausgestaltung denkbar, bei der diese Hinterschneidung lediglich für einen Bewegungsabschnitt gegeben ist, in dem der Dichtungsring von den Anlageschultern aufgegriffen und auf das Bauteil gestülpt wird. Für restliche Bewegungsabschnitte kann dann vorgesehen sein, dass die Anlageschultern sich aus der Hinterschneidung herausbewegen.

Eine bevorzugte Ausgestaltung sieht vor, dass die Relativbewegung des Aufnahmedorns gegenüber der Aufspreizanordnung bei Einnahme der aufgespreizten Stellung in eine Bewegung der Aufspreizanordnung gegenüber dem Gehäuse von der ersten Endstellung in die zweite Endstellung übergeht.

Eine bevorzugte Ausgestaltung beinhaltet, dass für ein Bewirken der Relativbewegung zwischen Aufnahmedorn und der Aufspreizanordnung und/oder der Bewegung zwischen Aufspreizanordnung und Gehäuse ein händisches Aktuieren oder ein motorbasiertes Antreiben vorgesehen ist.

Erfindungsgemäß ist vorgesehen, dass die Relativbewegung zwischen Aufnahmedorn und der Aufspreizanordnung in die aufgespreizte Stellung und die Relativbewegung zwischen Aufspreizanordnung und Gehäuse in die zweite Endstellung gegen eine Federbeaufschlagung erfolgt. Über das Federbeaufschlagen ist eine Rückstellung des Montagewerkzeugs in den Ausgangszustand gewährleistet. Hierfür können eine oder mehrere Druckfedern, insbesondere Schraubendruckfedern, vorgesehen sein, welche sich zu einer Seite an dem Gehäuse oder an dem Gehäusedeckelelement des Gehäuses nach vertikal unten abstützen. Alternativ wäre auch denkbar, dass ein oder mehrere analog angeordnete Zugfedern oder Gasfederelemente eine Rückstellkraft aufbringen.

Bevorzugt ist die Aufspreizanordnung durch mehrere, im Wesentlichen entsprechend ausgebildete, einen Teilumfang abdeckende Umfangssegmente gebildet. Hierdurch ist es möglich, dass die Aufspreizanordnung durch relatives Verschieben der Umfangssegmente zueinander aufspreizt. Konkret ist hierbei denkbar, dass die Umfangssegmente zumindest in der aufgespreizten Stellung zueinander jeweils umfänglich beabstandet angeordnet sind. In der Ausgangsstellung können dann die Umfangssegmente eine zumindest weitestgehend geschlossene Umfangskontur ausbilden. Es kann zumindest eine Federbeaufschlagung vorgesehen sein, die die Umfangssegmente in die Ausgangsstellung beaufschlagen.

In einer bevorzugten Ausgestaltung ist vorgesehen, dass der Sitz der Aufspreizanordnung mehrere in einer Axialebene liegende Anlageflächen und mehrere gegenüber den Anlageflächen in axialer Richtung angestellte Spannflächen ausbildet.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:

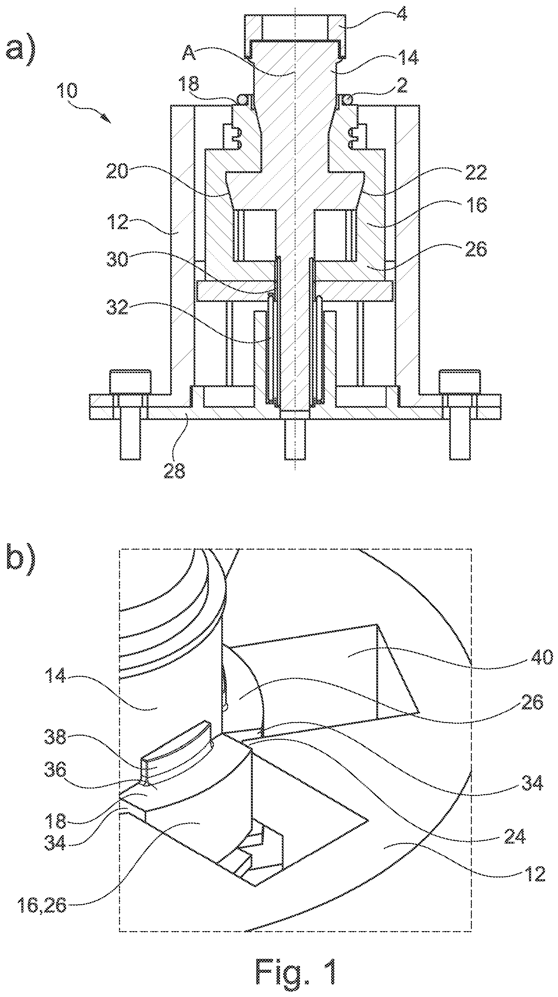

Fig. 1a), 2a) bis 3b): eine Ausführungsform eines Montagewerkzeugs in einer Querschnittsansicht und jeweils unterschiedlichen Stellungen und
Fig. 1b): eine perspektivische Detaillierung des Montagewerkzeugs.

Die Figur 1a) und 2a) bis 3b) zeigen eine Ausführungsform eines Montagewerkzeugs 10 in einer Querschnittsansicht und jeweils unterschiedlichen Stellungen der noch zu beschreibenden beweglichen Einzelteile zueinander. Das Montagewerkzeug 10 dient dazu ein Bauteil 4 zu halten und auf dieses Bauteil einen Dichtungsring 2 in Form eines O-Rings aufzuziehen bzw. aufzustülpen. Die Figur 1b) zeigt eine perspektivische Detaillierung des Montagewerkzeugs 10.

Das Montagewerkzeug 10 weist ein Gehäuse 12 umfassend ein bodenseitiges Gehäusedeckelelement 28 auf. Das Gehäuse 12 und das Gehäusedeckelelement 28 können gegeneinander verschraubt sein. Über die Verschraubung kann das Montagewerkzeug 10 an sich beispielsweise auf einem Montagetisch verschraubt sein. In dem Gehäuse 12 sind ein Aufnahmedorn 14 zur Aufnahme des Bauteils 4 und eine den Aufnahmedorn 14 umgebende Aufspreizanordnung 16 mit einem Sitz 18 zur Aufnahme des Dichtungsrings 2 aufgenommen. Das Bauteil 4 ist vorliegend lediglich schematisch dargestellt, um seine Position an dem Montagewerkzeug 10 zu zeigen. Der Aufnahmedorn 14 ist im Wesentlichen innerhalb der Aufspreizanordnung 16 angeordnet, wobei der Aufnahmedorn 14 und die Aufspreizanordnung 16 koaxial zu einer in Axialrichtung A verlaufenden Mittelachse ausgerichtet sind. Der Aufnahmedorn 14 ragt in einer Ausgangsstellung über die Aufspreizanordnung 16 hinaus und nimmt an seinem vertikal oberen Ende das Bauteil 4 auf. Die Aufspreizanordnung 16 bildet innerhalb des den Aufnahmedorn 14 umgebenden Bereichs Aufgleitschrägen 20, die mit gegenläufig ausgerichtet Aufgleitschrägen 22 des Aufnahmedorns 14 bei einer Relativbewegung zwischen Aufspreizanordnung 16 und Aufnahmedorn 14 zusammenwirken. Über dieses Zusammenwirken der Aufgleitschrägen 20, 22 kann bei einer zwischen Aufnahmedorn 14 und Aufspreizanordnung 16 in Axialrichtung A bewirkten Relativbewegung die Aufspreizanordnung 16 zwischen einer Ausgangsstellung und aufgespreizten Stellung gestellt werden.

Zudem ist die Aufspreizanordnung 16 in dem Gehäuse 12 in Axialrichtung A zwischen einer ersten Endstellung und einer zweiten Endstellung beweglich aufgenommen. Eine entsprechende Relativbewegung herrscht dabei zwischen der Aufspreizanordnung 16 und dem Gehäuse 12, während der Aufnahmedorn 14 keine Bewegung gegenüber der Aufspreizanordnung 16 ausführt. Zumindest in der ersten Endstellung ragt die Aufspreizanordnung 16 so weit nach vertikal oben aus dem Gehäuse 12 heraus, dass in diesem Bereich der zu montierende Dichtungsring 2 auf einem Sitz 18 der Aufspreizanordnung 16 aufgenommen werden kann. Zunächst liegt der Dichtungsring 2 auf dem Sitz 18 in der beschriebenen Ausgangsstellung und der beschriebenen ersten Endstellung ungespannt auf.

Der Aufnahmedorn 14 und die Aufspreizanordnung 16 stützen sich jeweils über Druckfedern 30, 32 nach vertikal unten gegenüber dem Gehäuse 12, hier dem bodenseitigen Gehäusedeckelelement 28 des Gehäuses 12 ab. Die Druckfedern 30, 32 sind koaxial zum Aufnahmedorn 14 und zu der in Axialrichtung A verlaufenden Mittelachse angeordnet und beaufschlagen jeweils den Aufnahmedorn 14 in die Ausgangsstellung und die Aufspreizanordnung 16 in die erste Endstellung.

Die Figur 1b) zeigt eine perspektivische Detaillierung von schräg oben auf das Montagewerkzeug 10. Gezeigt ist das Gehäuse 12, der Aufnahmedorn 14 und ein oberer Bereich der Aufspreizanordnung 16, in dem der Sitz 18 für den zu montierenden Dichtungsring 2 angeordnet ist. Der Dichtungsring 2 ist in der Figur 1b) nicht dargestellt.

Der Aufnahmedorn 14 ist in der Ausgangsstellung und die Aufspreizanordnung 16 ist in der ersten Endstellung gezeigt. Es ist zu erkennen, dass das Gehäuse 12 den Sitz 18 der Aufspreizanordnung 16 in radialer Richtung hinterschneidet. Die Aufspreizanordnung 16 bildet hierzu mehrere über den Umfang verteilte axial verlaufende Ausnehmungen 34 aus. Das Gehäuse 12 weist mehrere über einen Umfang verteilte Anlageschultern 24 auf, die beispielsweise von einer sternförmigen Kontur gebildet sein können und jeweils radial nach innen in eine entsprechende Ausnehmung 34 ragen. Hierbei kann vorgesehen sein, dass die Anlageschultern 24 in jeweiligen spitzen Abschnitten enden und diese Abschnitte den eigentlichen Hinterschnitt bilden. Die Anlageschultern 24 beziehungsweise die spitzen Abschnitte sind in der ersten Endstellung der Aufspreizanordnung 16 vertikal unterhalb des Sitzes 18 positioniert und, wie noch beschrieben wird, durchfahren bei einer Bewegung der Aufspreizanordnung 16 zwischen den beiden Endstellungen den Sitz 18. Die Anlageschultern 24 sind in der Lage, den auf dem Sitz 18 positionierten Dichtungsring 2 abzustreifen.

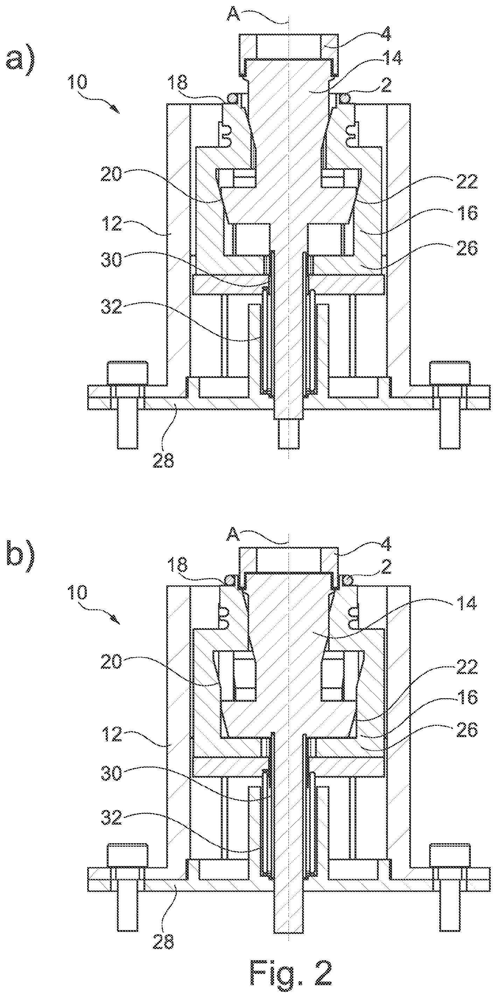

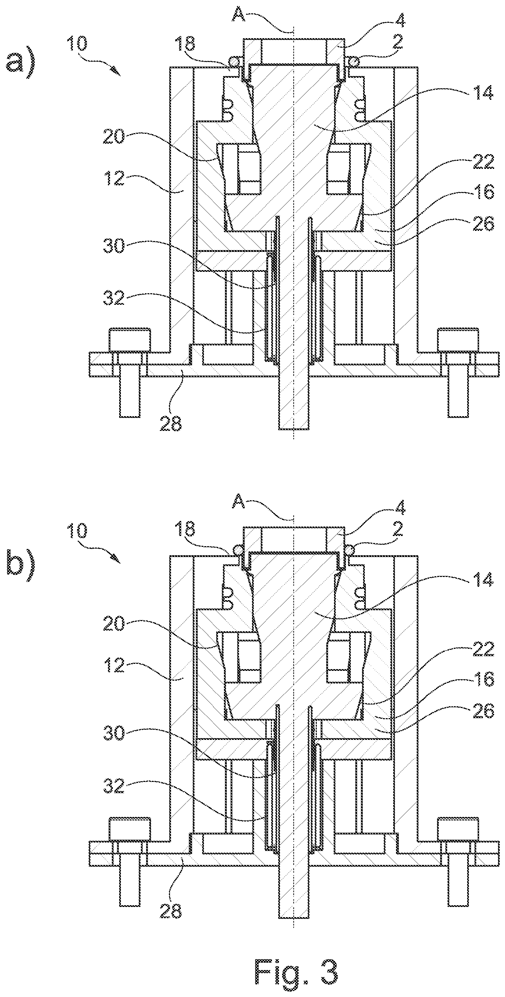

In der Figur 2b) ist ferner zu erkennen, dass die Aufspreizanordnung 16 mehrere, im Wesentlichen entsprechend ausgebildete, einen Teilumfang abdeckende Umfangssegmente 26 aufweist. Es ist zweckmäßig, wenn jedes Umfangssegment 26 entsprechend seines Beitrags zum Umfang der Aufspreizanordnung 16 anteilsgemäß den Sitz 18 ausbildet, wobei jeder der Anteile des Sitzes 18 eine in einer Axialebene liegende Anlagefläche 36 und eine gegenüber der Anlagefläche 36 in axialer Richtung angestellte Spannfläche 38 ausbildet. Korrespondierend zu jedem Umfangssegment 26 weist das Gehäuse radial verlaufende Gassen 40 auf, in die die Umfangssegmente 26 bei einer Bewegung von der Ausgangsstellung in die Aufspreizstellung einrücken können.

Im Wesentlichen unter Bezugnahme auf die Figuren 1a) und 2a) bis 3b) wird nachfolgend ein Ablauf einer Montage eines Dichtungsrings 2 auf ein Bauteil 4 beschrieben. Zuerst wird der Dichtungsring 2 auf den Sitz 18 der Aufspreizanordnung 16 positioniert, wobei sich das Montagewerkzeug 10 insgesamt noch in der zuvor beschriebenen Ausgangsstellung und der ersten Endstellung befindet. Anschließend wird das Bauteil 4, auf das es den Dichtungsring 2 zu montieren gilt, auf den Aufnahmedorn 14 aufgesetzt. Um den Montagevorgang einzuleiten, wird der Aufnahmedorn 14 des Montagewerkzeugs 10 durch eine externe Kraft, beispielsweise durch eine händische Betätigung oder unterstützt durch einen Kollaborationsroboter oder sonstige Automation, nach unten bewegt.

Durch die resultierende Abwärtsbewegung des Aufnahmedorns 14 kommt es zu einem Abgleiten der jeweiligen Abgleitschrägen 20, 22 zueinander und hierüber wird die Aufspreizanordnung 16 gespreizt beziehungsweise in ihrem Umfang erweitert. Währenddessen wird der Dichtungsring 2, der auf dem Sitz 18 positioniert ist, gleichermaßen aufgeweitet und zwar werden im Wesentlichen über die Spannflächen 38 des Sitzes 18 Radialkräfte auf den Dichtungsring 2 ausgeübt, die zu dessen Aufweitung führen.

Sobald der Dichtungsring 2 auf den erforderlichen Durchmesser aufgeweitet ist, fährt der Aufnahmedorn 14 ohne zusätzliche Aufweitung weiter auf die erforderliche Tiefe, siehe Figur 2a). Nach dem Erreichen des Anschlags bewegt sich die Einheit aus Aufnahmedorn 14 und Aufspreizanordnung 16 durch zusätzliche vertikale Kraft weiter abwärts, bis der Dichtungsring 2 über die Anlageschultern 24 des Gehäuses 12 auf das Bauteil 4 abgestreift wird.

Durch die Druckfedern 30, 32, sowie optionale ringförmige Federelemente (nicht dargestellt), welche die Aufspreizanordnung 16 umfassen können, wird das Montagewerkezeug 10 nach erfolgter Montage des Dichtungsrings 2 wieder zurück in die Ausgangsstellung gebracht.

### Bezugszeichenliste

- 2: Dichtungsring
- 4: Bauteil
- 10: Montagewerkzeug
- 12: Gehäuse
- 14: Aufnahmedorn
- 16: Aufspreizanordnung
- 18: Sitz
- 20: Aufgleitschräge
- 22: Aufgleitschräge
- 24: Anlageschulter
- 26: Umfangssegment
- 28: Gehäusedeckelelement
- 30: Druckfeder
- 32: Druckfeder
- 34: Ausnehmung
- 36: Anlagefläche
- 38: Spannfläche
- 40: Gasse

## Patentansprüche

1. Montagewerkzeug (10) zur Montage eines elastischen Dichtungsrings (2) an einem Bauteil (4), mit
einem Gehäuse (12),
einem Aufnahmedorn (14) zur Aufnahme des Bauteils (4),
einer den Aufnahmedorn (14) umgebenden Aufspreizanordnung (16) mit einem Sitz (18) zur Aufnahme des Dichtungsrings (2) über den Sitz (18), wobei gegeneinander in einer Wirkverbindung stehende Aufgleitschrägen (20, 22) des Aufnahmedorns (14) und der Aufspreizanordnung (16) bei einer zwischen Aufnahmedorn (14) und Aufspreizanordnung (16) in einer in Axialrichtung A bewirkten Relativbewegung die Aufspreizanordnung (16) zwischen einer Ausgangsstellung und aufgespreizten Stellung bewegen und
wobei die Aufspreizanordnung (16) in dem Gehäuse (12) in Axialrichtung A zwischen einer ersten Endstellung und einer zweiten Endstellung beweglich aufgenommen ist und das Gehäuse (12) den Sitz (18) der Aufspreizanordnung (16) in radialer Richtung hinterschneidet,
wobei die Relativbewegung zwischen Aufnahmedorn (14) und der Aufspreizanordnung (16) in die aufgespreizte Stellung und die Relativbewegung zwischen Aufspreizanordnung (16) und Gehäuse (12) in die zweite Endstellung gegen eine oder jeweilige Federbeaufschlagungen erfolgt, **dadurch gekennzeichnet, dass**
der Aufnahmedorn (14) und die Aufspreizanordnung (16) sich jeweils über koaxial zum Aufnahmedorn (14) und zu einer in Axialrichtung A verlaufenden Mittelachse angeordnete Druckfedern (30, 32) nach vertikal unten gegenüber dem Gehäuse (12) abstützen.

2. Montagewerkzeug (10) nach Anspruch 1, **dadurch gekennzeichnet, dass** die Aufspreizanordnung (16) bei einer relativen Bewegung bezüglich des Gehäuses (12) zwischen den beiden Endstellungen den Sitz (18) der Aufspreizanordnung (16) in axialer Richtung durchfährt.

3. Montagewerkzeug (10) nach Anspruch 1 oder 2, **dadurch gekennzeichnet, dass** das Gehäuse (12) mehrere über einen Umfang verteilte Anlageschultern (24) aufweist, wobei die Anlageschultern (24) die Aufspreizanordnung (16) in radialer Richtung hinterschneiden.

4. Montagewerkzeug (10) nach einem der Ansprüche 1 bis 3, **dadurch gekennzeichnet, dass** die Relativbewegung des Aufnahmedorns (14) gegenüber der Aufspreizanordnung (16) bei Einnahme der aufgespreizten Stellung in eine Bewegung der Aufspreizanordnung (16) gegenüber dem Gehäuse (12) von der ersten Endstellung in die zweite Endstellung übergeht.

5. Montagewerkzeug (10) nach einem der Ansprüche 1 bis 4, **dadurch gekennzeichnet, dass** für ein Bewirken der Relativbewegung zwischen Aufnahmedorn (14) und der Aufspreizanordnung (16) und/oder der Bewegung zwischen Aufspreizanordnung (16) und Gehäuse (12) ein händisches Aktuieren, ein motorbasiertes oder pneumatisches Antreiben vorgesehen ist.

6. Montagewerkzeug (10) nach einem der Ansprüche 1 bis 5, **dadurch gekennzeichnet, dass** das Gehäuse (12) ein Gehäusedeckelelement (28) aufweist, gegen welches die Druckfedern (30, 32) sich nach vertikal unten abstützen.

7. Montagewerkzeug (10) nach einem der Ansprüche 1 bis 6, **dadurch gekennzeichnet, dass** die Aufspreizanordnung (16) durch mehrere, im Wesentlichen entsprechend ausgebildete, einen Teilumfang abdeckende Umfangssegmente (26) gebildet ist.

8. Montagewerkzeug (10) nach Anspruch 7, **dadurch gekennzeichnet, dass** die Umfangssegmente (26) zumindest in der aufgespreizten Stellung zueinander jeweils umfänglich beabstandet angeordnet sind.

9. Montagewerkzeug (10) nach Anspruch 7 oder 8, **dadurch gekennzeichnet, dass** die Umfangssegmente (26) durch zumindest eine Federbeaufschlagung in die Ausgangsstellung beaufschlagt werden.

10. Montagewerkzeug (10) nach einem der Ansprüche 1 bis 9, **dadurch gekennzeichnet, dass** der Sitz (18) der Aufspreizanordnung (18) mehrere in einer Axialebene liegende Anlageflächen (36) und mehrere gegenüber den Anlageflächen (36) in axialer Richtung angestellte Spannflächen (38) ausbildet.

## Claims

1. A mounting tool (10) for mounting a resilient sealing ring (2) on a component (4), having
a housing (12),
a receiving mandrel (14) for receiving the component (4),
an expansion assembly (16) surrounding the receiving mandrel (14) and having a seat (18) for receiving the sealing ring (2) via the seat (18), wherein sliding bevels (20, 22) of the receiving mandrel (14) and the expansion assembly (16), which are operatively connected to one another, move the expansion assembly (16) between an initial position and a spread-open position during a relative movement effected between the receiving mandrel (14) and the expansion assembly (16) in an axial direction A, and
wherein the expansion assembly (16) is movably received in the housing (12) in the axial direction A between a first end position and a second end position and the housing (12) undercuts the seat (18) of the expansion assembly (16) in the radial direction,
wherein the relative movement between the receiving mandrel (14) and the expansion assembly (16) into the spread-open position and the relative movement between the expansion assembly (16) and the housing (12) into the second end position takes place counter to one or any respective spring loads, **characterised in that** the receiving mandrel (14) and the expansion assembly (16) are each supported vertically downwards with respect to the housing (12) via compression springs (30, 32) arranged coaxially to the receiving mandrel (14) and to a central axis running in the axial direction A.

2. The mounting tool (10) according to claim 1, **characterised in that** the expansion assembly (16) passes through the seat (18) of the expansion assembly (16) in the axial direction during a relative movement with respect to the housing (12) between the two end positions.

3. The mounting tool (10) according to claim 1 or 2, **characterised in that** the housing (12) has a plurality of contact shoulders (24) distributed over a circumference, wherein the contact shoulders (24) undercut the expansion assembly (16) in the radial direction.

4. The mounting tool (10) according to one of claims 1 to 3, **characterised in that** the relative movement of the receiving mandrel (14) with respect to the expansion assembly (16) when assuming the spread-open position changes into a movement of the expansion assembly (16) relative to the housing (12) from the first end position to the second end position.

5. The mounting tool (10) according to any one of claims 1 to 4, **characterised in that** a manual actuation, a motor-based or pneumatic drive is provided for effecting the relative movement between the receiving mandrel (14) and the expansion assembly (16) and/or the movement between the expansion assembly (16) and the housing (12).

6. The mounting tool (10) according to any one of claims 1 to 5, **characterised in that** the housing (12) has a housing cover element (28) against which the compression springs (30, 32) are supported vertically downwards.

7. The mounting tool (10) according to any one of claims 1 to 6, **characterised in that** the expansion assembly (16) is formed by a plurality of substantially correspondingly configured circumferential segments (26) covering a partial circumference.

8. The mounting tool (10) according to claim 7, **characterised in that** the circumferential segments (26) are arranged spaced apart from one another over the entire circumference at least in the spread-open position.

9. The mounting tool (10) according to claim 7 or 8, **characterised in that** the circumferential segments (26) are acted upon by at least one spring action to return to the starting position.

10. The mounting tool (10) according to any one of claims 1 to 9, **characterised in that** the seat (18) of the expansion assembly (18) forms a plurality of contact surfaces (36) lying in an axial plane and a plurality of clamping surfaces (38) arranged in the axial direction relative to the contact surfaces (36).

## Revendications

1. Outil de fixation (10) pour la fixation d'une bague d'étanchéité (2) élastique sur un élément (4), comportant
un boîtier (12),
un mandrin de réception (14) pour recevoir l'élément (4),
un agencement d'écartement (16) entourant le mandrin de réception (14) comportant une surface d'appui (18) pour recevoir la bague d'étanchéité (2) sur la surface d'appui (18), dans lequel des chanfreins coulissants (20, 22) en liaison fonctionnelle l'un avec l'autre du mandrin de réception (14) et de l'agencement d'écartement (16) déplacent l'agencement d'écartement (16) entre une position initiale et une position écartée dans le cas d'un mouvement relatif effectué dans la direction axiale A entre le mandrin de réception (14) et l'agencement d'écartement (16) et
dans lequel l'agencement d'écartement (16) est reçu de manière mobile dans le boîtier (12) dans la direction axiale A entre une première position d'extrémité et une seconde position d'extrémité et le boîtier (12) crée une contre-dépouille sur la surface d'appui (18) de l'agencement d'écartement (16) dans la direction radiale,
dans lequel le mouvement relatif entre le mandrin de réception (14) et l'agencement d'écartement (16) dans la position écartée et le mouvement relatif entre l'agencement d'écartement (16) et le boîtier (12) dans la deuxième position d'extrémité s'effectuent contre une ou plusieurs sollicitations de ressort respectives, **caractérisé en ce que** le mandrin de réception (14) et l'agencement d'écartement (16) sont respectivement supportés verticalement vers le bas par rapport au boîtier (12) par l'intermédiaire de ressorts de pression (30, 32) agencés de manière coaxiale au mandrin de réception (14) et à un axe central s'étendant dans la direction axiale A.

2. Outil de fixation (10) selon la revendication 1, **caractérisé en ce que** l'agencement d'écartement (16) traverse la surface d'appui (18) de l'agencement d'écartement (16) dans la direction axiale lors d'un mouvement relatif par rapport au boîtier (12) entre les deux positions d'extrémité.

3. Outil de fixation (10) selon la revendication 1 ou 2, **caractérisé en ce que** le boîtier (12) présente plusieurs épaulements de butée (24) répartis sur une circonférence, les épaulements de butée (24) formant une contre-dépouille dans l'agencement d'écartement (16) dans la direction radiale.

4. Outil de fixation (10) selon l'une des revendications 1 à 3, **caractérisé en ce que** le mouvement relatif du mandrin de réception (14) par rapport à l'agencement d'écartement (16) lors de la prise de la position écartée se transforme en un mouvement de l'agencement d'écartement (16) par rapport au boîtier (12) de la première position d'extrémité à la seconde position d'extrémité.

5. Outil de fixation (10) selon l'une des revendications 1 à 4, **caractérisé en ce qu'**un actionnement manuel, motorisé ou pneumatique permet d'obtenir le mouvement relatif entre le mandrin de réception (14) et l'agencement d'écartement (16) et/ou le mouvement entre l'agencement d'écartement (16) et le boîtier (12).

6. Outil de fixation (10) selon l'une des revendications 1 à 5, **caractérisé en ce que** le boîtier (12) présente un élément de couvercle de boîtier (28) contre lequel les ressorts de pression (30, 32) s'appuient verticalement vers le bas.

7. Outil de fixation (10) selon l'une des revendications 1 à 6, **caractérisé en ce que** l'agencement d'écartement (16) est formé par plusieurs segments circonférentiels (26) conçus de manière sensiblement correspondante et recouvrant une circonférence partielle.

8. Outil de fixation (10) selon la revendication 7, **caractérisé en ce que** les segments circonférentiels (26) sont agencés à une distance circonférentielle respective les uns des autres au moins dans la position écartée.

9. Outil de fixation (10) selon la revendication 7 ou 8, **caractérisé en ce que** les segments circonférentiels (26) sont sollicités dans la position initiale par au moins une sollicitation de ressort.

10. Outil de fixation (10) selon l'une des revendications 1 à 9, **caractérisé en ce que** la surface d'appui (18) de l'agencement d'écartement (18) forme plusieurs surfaces d'appui (36) situées dans un plan axial et plusieurs surfaces de serrage (38) placées dans la direction axiale par rapport aux surfaces d'appui (36).
